# EUROPÄISCHE PATENTSCHRIFT

(11) **EP 3 986 792 B1**
(45) Veröffentlichungstag und Bekanntmachung des Hinweises auf die Patenterteilung: **14.02.2024**
(21) Anmeldenummer: 20728723.6
(22) Anmeldetag: 26.05.2020
(51) Int. Cl.: B64F 5/40, B64F 5/50, B66F 9/075, B60P 1/02, B60P 1/64, B60P 1/54

(54) **SYSTEM UND VERFAHREN ZUM BEREITSTELLEN VON WARTUNGS- UND INSTANDSETZUNGSEINHEITEN FÜR WARTUNGSARBEITEN AN FLUGZEUGEN**
SYSTEM AND METHOD FOR THE PROVISION OF MAINTENANCE AND REPAIR UNITS FOR MAINTENANCE OPERATIONS ON AIRCRAFT
SYSTÈME ET PROCÉDÉ POUR LA PROVISION D'UNITÉS D'ENTRETIEN ET RÉPARATION POUR OPERATIONS D'ENTRETIEN SUR DES AÉRONEFS

(30) Priorität: 21.06.2019 DE 102019116807
(43) Veröffentlichungstag der Anmeldung: 27.04.2022
(73) Patentinhaber: Hubtex Maschinenbau GmbH & Co. KG, 36041 Fulda (DE); Dimos Maschinenbau GmbH, 36100 Petersberg (DE)
(72) Erfinder: SCHÜTZ, Alfred, 36041 Fulda (DE); SCHÜTZ, Pascal, 36041 Fulda (DE); KELLER, Jürgen, 36137 Großenlüder (DE)
(74) Vertreter: Kluin Patent
(86) Internationale Anmeldenummer: PCT/EP2020/064560
(87) Internationale Veröffentlichungsnummer: WO 2020/254074

(56) Entgegenhaltungen:
- WO-A1-2010/000018
- JP-A- H01 237 230
- JP-A- 2002 154 792
- US-A- 4 801 237
- US-A1- 2007 253 801

## Beschreibung

Die Erfindung betrifft ein System zum Bereitstellen von Wartungs- und Instandsetzungseinheiten für dezentrale Wartungsarbeiten an Flugzeugen, nämlich zum Radwechsel am Fahrwerk von Flugzeugen. Ferner betrifft die Erfindung ein Verfahren zum Bereitstellen von Wartungs- und Instandsetzungseinheiten für Wartungsarbeiten an Flugzeugen.

Wartungs- und Instandsetzungsarbeiten an Flugzeugen werden in der Regel an einem Flughafen in einer Flugzeughalle, einem sogenannten Hangar, durchgeführt. Nicht selten kommt es jedoch vor, dass zur Vermeidung eines Zeitverlusts kleinere Reparaturen, Wartungs- oder Instandsetzungsarbeiten auch außerhalb solcher Flugzeughallen erfolgen, insbesondere auf dem Flughafenvorfeld, wie beispielsweise an einer Außenposition oder an einer Parkposition mit Anschlussmöglichkeit des Flugzeugs an eine Fluggastbrücke.

Die aufgrund des Verschleißes mit am häufigsten auftretenden Wartungs- und Instandsetzungsarbeiten an Flugzeugen betreffen den Austausch einzelner oder sämtlicher Flugzeugräder an dem Bug- und/oder Hauptfahrwerk eines Flugzeugs. Hierbei hat sich - insbesondere aufgrund der Zeitersparnis - der Austausch des gesamten Flugzeugrads, das heißt Reifen mit Felge, bewährt.

Um an den zuvor angesprochenen Parkpositionen auf einem Flughafenvorfeld das für die Wartungs- und Instandsetzungsarbeiten jeweils erforderliche Equipment bzw. die erforderlichen Ausrüstungsmittel, wie Werkzeuge, Hilfsmittel, Betriebsmittel, Ersatzteile, wie Ersatzräder, und dergleichen bereitstellen zu können, haben sich verschiedene Systeme und Verfahren entwickelt.

Es sind Systeme bekannt, bei denen zu Wartungs- und Instandsetzungsarbeiten Flugzeugmechaniker mit einem Werkstattfahrzeug zu einem jeweiligen auf einer Parkposition befindlichen Flugzeug fahren, und das Werkstattfahrzeug für die Zeit der Wartungs- und Instandsetzungsarbeiten am Flugzeug in der Nähe der Arbeitsstätte verbleibt. Das Werkstattfahrzeug kann hierbei mit den erforderlichen Ausrüstungsmitteln beladen sein. Darüber hinaus kann das Werkstattfahrzeug mit einem Hebekran ausgestattet sein, zu dessen Nutzung das Fahrzeug zur verbesserten Standfestigkeit in der Regel auf ausfahrbare Stelzen aufgebockt wird. Nachteilig an solchen Fahrzeugen ist jedoch, dass derartige Werkstattfahrzeuge aufgrund ihrer Beschaffenheit als motorisierte Fahrzeuge sowohl in der Anschaffung als auch in der Unterhaltung im Betrieb - insbesondere hervorgerufen durch erforderliche Zulassungen, zu erneuernde Betriebsgenehmigungen, Reparatur- oder Wartungsarbeiten und/oder Betriebsmittel - relativ kostenintensiv sind. Dies kann insbesondere an größeren Flughäfen, an denen oftmals mehr als ein Flugzeug zur gleichen Zeit bearbeitet werden soll und dadurch mehr als ein Werkstattfahrzeug erforderlich ist, nicht unerhebliche Kosten verursachen.

Infolgedessen werden heutzutage alternativ zu den motorisierten Werkstattfahrzeugen zunehmend auch einfache, mit Ausrüstungsmitteln beladene Anhänger als "mobile Werkstatt" verwendet. Solche Anhänger dienen dabei primär der Bereitstellung der Ausrüstungsmittel. Ein Hilfsmittel, wie ein Hebekran, kann mit solchen Anhängern in der Regel jedoch nicht bereitgestellt werden. Dies führt dazu, dass sämtliche Ausrüstungsmittel händisch von dem Anhänger entladen oder auf den Anhänger beladen werden müssen. Dies bedeutet beispielsweise bei einem Radwechsel, dass ein Flugzeugrad, welches etwa 150 kg wiegt, per Hand auf den Anhänger geladen werden muss, welches selbst bei einer geringen Ladehöhe einen enormen Kraftaufwand erfordert. Die sich aus dieser Problematik im Stand der Technik entwickelte Verbesserung einer Anordnung einer Laderampe zur Möglichkeit einer Rollbewegung der Räder beim Be- und Entladen führt jedoch zu einer Erhöhung der Unfallgefahr, insbesondere durch ein Stolpern über die Rampe und/oder ein seitliches Abrutschen und Herunterfallen des Rads. Darüber hinaus ist das Ladegewicht eines solchen Werkstatt-Anhängers begrenzt, sodass in der Regel lediglich zwei bis vier Ersatzräder mitgenommen werden können.

Eine weitere, insbesondere an Flughäfen gegebene Problematik, ist der begrenzte Platz neben und unterhalb eines Flugzeugs. So sollten die in diesem Bereich eingesetzten Fahrzeuge zur Vermeidung von Kollisionen eine bestimmte Größe nicht überschreiten. Dies kann insbesondere bei Standardfahrzeug oder Standardanhängern problematisch sein.

Darüber hinaus sind Systeme bekannt, bei denen mindestens eine Wartungs- und Instandsetzungseinheit und mindestens ein Transportfahrzeug mit einer Hubeinrichtung zum Anheben, Absetzen und Transportieren der Wartungs- und Instandsetzungseinheit vorgesehen sind. Die Wartungs- und Instandsetzungseinheit kann hierbei zumindest eine insbesondere separat und starr aufgebaute, zum Tragen von Ausrüstungsmitteln geeignete und als solche transportierbare Rahmenkonstruktion aufweisen.

Ein solches System ist beispielsweise aus der WO 2010/000018 A1 bekannt, wobei hierbei ein Rahmengestell vorgesehen ist, welches zur Aufnahme und Lagerung eines Flugzeugrads geeignet ist und mittels eines Hand-Hubwagens oder Gabelstaplers angehoben und transportiert werden kann. Das Rahmengestell dient ausschließlich zum Transport und Schutz des Flugzeugrads, nicht als Wartungs- und Instandsetzungseinheit. Dementsprechend ist ein weiteres Transport- oder Hilfsmittel erforderlich, um die für einen Radwechsel erforderlichen Ausrüstungsmittel, wie beispielsweise Werkzeuge und Betriebsmittel, am Flugzeug bereitzustellen. Dadurch ist jedoch ein erhöhter Platzbedarf neben und unterhalb des Flugzeugs erforderlich.

Ferner ist aus der US 4 801 237 A und JP 2002 154792 A jeweils ein Transportfahrzeug mit einem Ladekran und einem daran angeordneten Ladegestell zur Aufnahme eines Flugzeugrads bekannt. Auch hierbei ist das Ladegestell nicht als eine Wartungs- und Instandsetzungseinheit für dezentrale Wartungsarbeiten an Flugzeugen ausgebildet. Es bedarf daher auch bei diesem System zusätzlicher Hilfs- oder Transportmittel zum Bereitstellen von Ausrüstungsmitteln.

Aufgabe der vorliegenden Erfindung ist es daher, ein System und Verfahren bereitzustellen, das zumindest einen der oben genannten Nachteile verbessert und insbesondere eine kostengünstige und sichere Bereitstellung einer Wartungs- und Instandsetzungseinheit für Wartungsarbeiten an Flugzeugen ermöglicht.

Die Erfindung löst die gestellte Aufgabe durch ein System mit den Merkmalen des Hauptanspruchs sowie durch ein Verfahren mit den Merkmalen des Anspruchs 10. Vorteilhafte Ausgestaltungen und Weiterbildungen der Erfindung sind in den Unteransprüchen, der Beschreibung sowie den Figuren offenbart.

Erfindungsgemäß sind innerhalb der Rahmenkonstruktion ein Lagerplatz für mindestens ein Flugzeugrad und mindestens eine Ausrüstungskammer zum Lagern von Ausrüstungsmitteln vorgesehen. Insbesondere kann es vorgesehen sein, dass innerhalb der Rahmenkonstruktion ein Ordnungssystem vorgesehen ist. Die Ausrüstungskammer kann beispielsweise als ein Regal oder Schrank ausgebildet sein. Besonders bevorzugt ist hierbei mindestens ein Regal- oder Schrankfach korrespondierend zu der Größe eines darin lagerbaren Ausrüstungsmittels ausgebildet.

An mindestens einem Lagerplatz kann eine Fixiereinrichtung zum zumindest temporären Fixieren des Flugzeugrads in dem Stellplatz angeordnet sein. Eine solche Fixiereinrichtung kann beispielsweise eine an dem Boden der Rahmenkonstruktion angeordnete, zu der Rundung des Flugzeugrads korrespondierend ausgebildete Wölbung sein, insbesondere in Art eines Unterlegkeils. Ferner kann als Fixiereinrichtung alternativ oder zusätzlich eine Aufnahme in der Art einer Radaufhängung zum Fixieren des Flugzeugrads an dem Stellplatz angeordnet sein. Dadurch kann das innerhalb der Rahmenkonstruktion befindliche Flugzeugrad in besonders sicherer Weise transportiert werden.

Die Rahmenkonstruktion kann von dem Transportfahrzeug für einen Transport aufgenommen oder an einem jeweiligen Standort auf den Untergrund abgesetzt werden, beispielsweise in der Art und Weise eines Wechselcontainers. Dadurch ist es möglich, dass eine mit Ausrüstungsmitteln bestückte Wartungs- und Instandsetzungseinheit von einem Transportfahrzeug zu einem Einsatzort verbracht und dort für die Zeit der Arbeiten am Flugzeug abgestellt werden kann, während das sodann leere Transportfahrzeug andere Wartungs- und Instandsetzungseinheiten zu einem jeweils anderen Einsatzort oder zurück zu einer Basis, wie einem Ausrüstungslager, in dem die Wartungs- und Instandsetzungseinheiten für einen Einsatz bestückt werden, transportieren kann. Dadurch ist insbesondere an größeren Flughäfen lediglich ein motorisiertes Fahrzeug erforderlich. Darüber hinaus ist durch eine unmittelbar auf dem Boden des Vorfelds abstellbare bzw. aufliegende Rahmenkonstruktion eine minimale Absatzhöhe zwischen der Wartungs- und Instandsetzungseinheit und dem Vorfeldboden ermöglicht, sodass der Kraftaufwand beim Be- und Entladen sowie die Unfallgefahr deutlich verringert ist. Insbesondere ist eine zusätzliche Rampe nicht erforderlich. Es sollte deutlich sein, dass vorliegend unter der Wartungs- und Instandsetzungseinheit die Gesamtheit der für die Wartungsarbeiten bei dem Flugzeug verbleibenden Mittel zu verstehen ist, insbesondere die mit den Ausrüstungsmitteln bestückbare Rahmenkonstruktion sowie optional weitere Hilfsmittel.

Besonders bevorzugt weist die Rahmenkonstruktion keine eigenen Räder zum Versetzen oder Rollen der Rahmenkonstruktion auf, das heißt sie ist räderlos. Dadurch kann die Rahmenkonstruktion unmittelbar und standsicher auf dem Boden des Vorfelds stehen, sodass beispielsweise ausfahrbare Stützen zur Erhöhung der Standsicherheit der Wartungs- und Instandsetzungseinheit nicht erforderlich sind. Die Ausrüstungsmittel können - wie oben bereits angesprochen - insbesondere Werkzeuge, wie Schraubenschlüssel, Hilfsmittel, wie einen Hebekran, Betriebsmittel, wie Hydrauliköl, Ersatzteile, wie Flugzeugräder, und dergleichen umfassen. Vorliegend umfassen die Ausrüstungsmittel insbesondere sämtliche Mittel, die für einen Flugzeugradwechsel benötigt werden.

Vorzugsweise ist die Rahmenkonstruktion als ein zumindest teilweise geschlossener Container mit einem Boden, Seitenwänden, einer Decke und/oder zumindest einer Tür ausgebildet. Dadurch können die in dem Container befindlichen Ausrüstungsmittel gegen Umwelteinflüsse besonders effektiv geschützt werden. Die Rahmenkonstruktion kann beispielsweise als ein begehbarer Service- oder Wartungscontainer ausgebildet sein, sodass die Ausrüstungsmittel in besonders komfortabler Weise in den oder aus dem Container geladen werden können. In dem Container kann beispielsweise ein Ordnungssystem, wie ein Regal oder Schrank zur Lagerung der Ausrüstungsmittel angeordnet sein. Dadurch kann eine große Menge von Ausrüstungsmitteln auf einem relativ kleinen Raum zwischengelagert sein.

Besonders bevorzugt liegt die Rahmenkonstruktion in einem Bereitstellungszustand mit einer Unterseite an einem Untergrundboden, insbesondere auf dem Flughafenvorfeldboden, auf. Der Bereitstellungszustand ist insbesondere jener Zustand, in dem die Rahmenkonstruktion nicht von dem Transportfahrzeug angehoben ist. Insbesondere ist der Bereitstellungszustand immer dann gegeben, wenn die Rahmenkonstruktion auf einem Untergrundboden abgestellt ist. Durch die hierbei besonders geringe Absatzhöhe zwischen einem Boden der Rahmenkonstruktion und dem Untergrundboden können Ausrüstungsmittel in besonders sicherer und komfortabler Weise in die oder aus der Rahmenkonstruktion transportiert werden.

In einer Ausgestaltung der Erfindung weist die Rahmenkonstruktion ein Außenmaß mit einer Breite von etwa 180cm, einer Länge von etwa 250cm und einer Höhe von etwa 200cm auf. Dadurch kann die Rahmenkonstruktion besonders geeignet zur Aufnahme von einem Aufnahmebereich eines Transportfahrzeugs mit einer Hubeinrichtung zum Anheben, Absetzen und Transportieren ausgebildet sein.

Die Wartungs- und Instandsetzungseinheit kann einen insbesondere separat ausgebildeten, mobilen Hubwagen umfassen, der zum Transport von Flugzeugrädern geeignet ist. Der Hubwagen kann beispielsweise als ein gewöhnlicher Handhubwagen ausgebildet sein. Der Hubwagen ist bevorzugt motorisch angetrieben, kann jedoch grundsätzlich auch als nicht-motorisch angetriebener Wagen ausgebildet sein. Vorteilhafterweise weist der Hubwagen zumindest zwei Hubgabeln auf, in deren Bereich bevorzugt eine Fixiereinrichtung zum zumindest temporären Fixieren eines Flugzeugrads an dem Hubwagen angeordnet ist. Der Hubwagen kann ferner eine Hubeinrichtung zum Anheben oder Absenken einer auf dem Hubwagen befindlichen Ladung, wie eines Flugzeugrads, aufweisen. Dazu weist der Hubwagen bevorzugt einen Hubmast auf. Dadurch kann die Ladung auch über größere Höhen angehoben oder abgesenkt werden.

Vorzugsweise ist an einer Seitenwandung der Rahmenkonstruktion eine Befestigungseinrichtung vorgesehen, an der der Hubwagen zumindest temporär befestigbar ist. Die Befestigungseinrichtung kann beispielsweise zwei zu den Gabeln des Hubwagens korrespondierende Aufnahmeschächte umfassen, in die jeweils eine Gabel des Hubwagens einschiebbar ist und der Hubwagen durch ein Verspannen der Gabeln innerhalb der Aufnahmeschächte fixiert werden kann. Dadurch kann der Hubwagen in besonders komfortabler Weise an der Rahmenkonstruktion befestigt werden, insbesondere für einen Transport der Wartungs- und Instandsetzungseinheit. Hierbei ist es besonders vorteilhaft, dass der Hubwagen bevorzugt von außen bzw. von der Umgebung der Rahmenkonstruktion in die Aufnahmeschächte der Befestigungseinrichtung einschiebbar ist, sodass bei einem Beginn von Wartungsarbeiten der Hubwagen als erstes Mittel der Wartungs- und Instandsetzungseinheit entnommen werden kann und beim Beenden der Arbeiten als letztes wieder an der Rahmenkonstruktion befestigt werden kann. Dies ist insbesondere für den Ablauf der Wartungsarbeiten vorteilhaft.

In einer besonders bevorzugten Ausgestaltung der Erfindung ist an der Rahmenkonstruktion ein Tragarm angeordnet, der zum Anheben und Versetzen eines Flugzeugrads geeignet ist. Der Tragarm kann insbesondere gegenüber der Rahmenkonstruktion verschwenkbar gelagert sein. Der Tragarm kann in seiner Längserstreckung verlängerbar ausgebildet sein, beispielsweise teleskopartig oder mittels eines zusätzlich ausschwenkbaren Armteils. Dadurch kann der Tragarm in der näheren Umgebung der Rahmenkonstruktion eingesetzt bzw. als Hilfsmittel benutzt werden. An dem freien Ende des Tragarms ist vorteilhafterweise eine Einrichtung zum zumindest temporären Fixieren eines Flugzeugrads an den Tragarm angeordnet. Dadurch kann der Tragarm beispielsweise zum Verlagern eines von einem Fahrwerk demontierten Flugzeugrads zu der Rahmenkonstruktion und/oder zum Verlagern eines Ersatzrads von der Rahmenkonstruktion zu dem Fahrwerk des Flugzeugs genutzt werden, sodass das Verlagern oder Versetzen des Rads besonders sicher und komfortabel ermöglicht ist. Insbesondere ist ein Kraftaufwand einer Person nicht erforderlich. Der Tragarm kann ferner durch eine an der Rahmenkonstruktion optional zusätzlich angeordneten Antriebs- und/oder Steuerungseinheit motorisch antreibbar und steuerbar sein. Der Tragarm kann an einer Außenseite der Rahmenkonstruktion angeordnet sein, er ist bevorzugt innerhalb der Rahmenkonstruktion angeordnet. Besonders bevorzugt ist der Tragarm zumindest teilweise von Wänden oder einer Decke der Rahmenkonstruktion umgeben, sodass der Tragarm - zumindest in einem eingefahrenen Zustand - vor Umwelteinflüssen, wie Regenwasser, geschützt sein kann.

Das Transportfahrzeug ist bevorzugt als ein Niederflurhubfahrzeug ausgebildet, bei dem die Ladung, insbesondere die Wartungs- und Instandsetzungseinheit bzw. die Rahmenkonstruktion, zwischen einem ersten Lastrad und einem zweiten Lastrad angeordnet und mittels der Hubeinrichtung im Wesentlichen horizontal anhebbar ist. Insbesondere kann die Ladung in Hauptfahrtrichtung des Fahrzeugs axial zwischen dem linken Lastrad und dem rechten Lastrad des Fahrzeugs angeordnet sein. Das Transportfahrzeug kann somit insbesondere zwischen zwei separaten, voneinander beabstandeten, in Längserstreckung des Fahrzeugs hervorstehenden und jeweils ein freies Ende aufweisenden Längsträgern die Rahmenkonstruktion aufnehmen, insbesondere zum Anheben, Absenken und Transportieren. Der Vorteil eines solchen Fahrzeugs liegt insbesondere darin, dass die Ladung, vorliegend die Wartungs- und Instandsetzungseinheit, in einer nahezu dauerhaft horizontalen Lage angehoben, abgesenkt und transportiert werden kann. Dadurch kann insbesondere ein Verrutschen der innerhalb der Rahmenkonstruktion befindlichen Ausrüstungsmittel vermieden werden. Ferner ist der zur Aufnahme oder zum Absetzen der Rahmenkonstruktion erforderliche Zeitaufwand besonders gering. Für eine verbesserte Übersicht kann eine Frontscheibe einer Führerkabine des Transportfahrzeugs von einer den oberen Abschluss der Führerkabine bildenden Decke bis hin zu einem den unteren Abschluss der Führerkabine bildenden Boden angeordnet sein. Dadurch kann einem Fahrer des Transportfahrzeugs ein besonders großes Sichtfeld ermöglicht sein.

Besonders bevorzugt weist das Transportfahrzeug mindestens eine zusätzliche Ladefläche auf, auf der mindestens eine Pressluftflasche transportierbar ist. Die Ladefläche kann insbesondere derart ausgebildet sein, dass hierauf die Pressluftflasche in einer horizontalen Ausrichtung des Pressluftflaschenzylinders transportierbar ist. Dadurch kann eine für Wartungsarbeiten an Flugzeugen üblicherweise verwendete Pressluftflasche verwendet werden. An der zusätzlichen Ladefläche ist ferner bevorzugt eine Befestigungseinrichtung zum zumindest temporären Befestigen einer Pressluftflasche an der Ladefläche angeordnet. Die Befestigungseinrichtung kann insbesondere in Art einer korrespondierenden Vertiefung, in die die Pressluftflasche bzw. eine Tragkonstruktion der Pressluftflasche, wie eine Rahmenkonstruktion, einsetzbar ist, in Art eines Haltebügels, der zum Fixieren der Tragkonstruktion der Pressluftflasche geeignet ist, oder dergleichen ausgebildet sein. Die Pressluftflasche dient beispielsweise bei Wartungsarbeiten zum Anheben eines Flugzeugs, insbesondere des Bug- oder eines der Hauptfahrwerke, mittels eines pneumatischen Hebezeugs.

Das erfindungsgemäße Verfahren zum Bereitstellen von Wartungs- und Instandsetzungseinheiten für Wartungsarbeiten an Flugzeugen, insbesondere zum Wechseln von Flugzeugrädern, unter Anwendung des Systems nach einem der Ansprüche 1 bis 9, sieht die folgenden Schritte vor: Bestücken mindestens einer Wartungs- und Instandsetzungseinheit mit Ausrüstungsmitteln in einem zentralen Ausrüstungslager, insbesondere auf einem Flughafengelände, Aufnehmen einer ersten Wartungs- und Instandsetzungseinheit von einem Transportfahrzeug, insbesondere durch ein Anheben der ersten Wartungs- und Instandsetzungseinheit mittels der Hubeinrichtung, Transportieren der ersten Wartungs- und Instandsetzungseinheit von dem Ausrüstungslager zu einem ersten Flugzeug, Absetzen der ersten Wartungs- und Instandsetzungseinheit von dem Transportfahrzeug, insbesondere im Bereich neben und/oder unterhalb des ersten Flugzeugs. Das Bestücken mit Ausrüstungsmitteln kann beispielsweise zentral in einem Ersatzteillager oder einer Werkstatt erfolgen, insbesondere kann es vorgesehen sein, dass mehrere Wartungs- und Instandsetzungseinheiten gleichzeitig bestückt werden können. Es sollte deutlich sein das unter Bestücken ein Beladen der Wartungs- und Instandsetzungseinheit mit Ausrüstungsmitteln zu verstehen ist. Dadurch kann die Bereitstellung einer Wartungs- und Instandsetzungseinheit für Wartungsarbeiten relativ schnell und ohne großen Zeitaufwand erfolgen. Gleichzeitig kann in der Zeit des Bestückens der Wartungs- und Instandsetzungseinheiten das Transportfahrzeug für andere Zwecke, beispielsweise zum Transport einer Wartungs- und Instandsetzungseinheit zu einem oder von einem Flugzeug, genutzt werden.

Vorzugsweise kann nach dem Absetzen der ersten Wartungs- und Instandsetzungseinheit von dem Transportfahrzeug ein Aufnehmen einer zweiten Wartungs- und Instandsetzungseinheit, ein Transportieren der zweiten Wartungs- und Instandsetzungseinheit von dem Ausrüstungslager zu einem zweiten Flugzeug und ein Absetzen der zweiten Wartungs- und Instandsetzungseinheit im Bereich des zweiten Flugzeugs erfolgen.

Besonders bevorzugt kann nach dem Absetzen der ersten oder zweiten Wartungs- und Instandsetzungseinheit ein an der Rahmenkonstruktion angeordnete Tragarm derart verlagert werden, dass bei einem Flugzeugradwechsel ein von einem Fahrwerk bzw. einer Radaufhängung eines Flugzeugs demontiertes Flugzeugrad mittels des Tragarms in Richtung der Wartungs- und Instandsetzungseinheit verlagert wird und optional einen Flugzeugrad von der Wartungs- und Instandsetzungseinheit zu dem Fahrwerk des Flugzeugs verlagert wird.

Nachfolgend wird ein Ausführungsbeispiel der Erfindung anhand der Figuren näher erläutert. Gleiche Bezugszeichen bezeichnen gleiche Komponenten. Es zeigen schematisch:
Figur 1 - eine Ausgestaltung eines erfindungsgemäßen Systems;
Figuren 2a bis 2d - das System in verschiedenen Zuständen in einer ersten perspektivischen Ansicht,
Figuren 3a bis 3d - das System in verschiedenen Zuständen in einer zweiten perspektivischen Ansicht,
Figuren 4a und 4b - jeweils eine Wartungs- und Instandsetzungseinheit des Systems in einer perspektivischen Ansicht, und
Figur 5 - eine Wartungs- und Instandsetzungseinheit mit einem Tragarm.

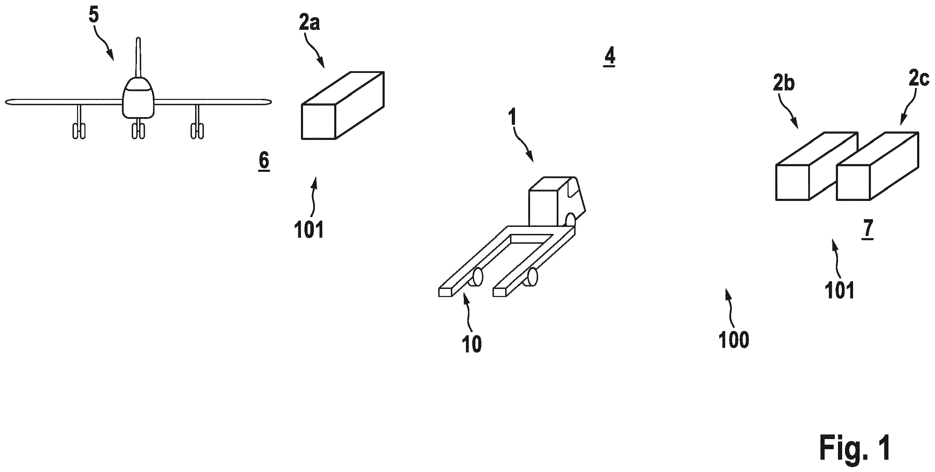

In der Figur 1 ist beispielhaft das System 100 zum Bereitstellen von Wartungs- und Instandsetzungseinheiten 2a, 2b, 2c für Wartungsarbeiten an einem Flugzeugen 5, welches sich auf einem nicht näher dargestellten Vorfeld 6 eines nicht näher dargestellten Flughafens 4 befinden, gezeigt. Die Wartungsarbeiten betreffen vorliegend den Wechsel bzw. Austausch von Flugzeugrädern 51.

Das System 100 umfasst im vorliegenden Beispiel insgesamt drei separate und voneinander unabhängige Wartungs- und Instandsetzungseinheiten, welche mit den Bezugszeichen 2a, 2b, 2c gekennzeichnet sind, sowie ein Transportfahrzeug 1 mit einer Hubeinrichtung 10 zum Anheben, Absetzen und Transportieren der Wartungs- und Instandsetzungseinheit 2a, 2b, 2c. Die Wartungs- und Instandsetzungseinheit 2a ist vorliegend in einem Bereitstellungszustand 101 an dem Flugzeug 5, die Wartungs- und Instandsetzungseinheiten 2b und 2c in einem Bereitstellungszustand 101 in einem nicht näher dargestellten Ausrüstungslager oder einer Werkstatt 7 gezeigt. In dem Ausrüstungslager 7 werden die Wartungs- und Instandsetzungseinheiten 2b, 2c für einen nachfolgenden Einsatz mit Ausrüstungsmitteln 3 bestückt.

Grundsätzlich ist jede Wartungs- und Instandsetzungseinheit 2a, 2b, 2c gleich aufgebaut; nachfolgende auf lediglich eine Wartungs- und Instandsetzungseinheit bezogene Beschreibungen gelten daher entsprechend auch für die jeweils anderen Wartungs- und Instandsetzungseinheiten.

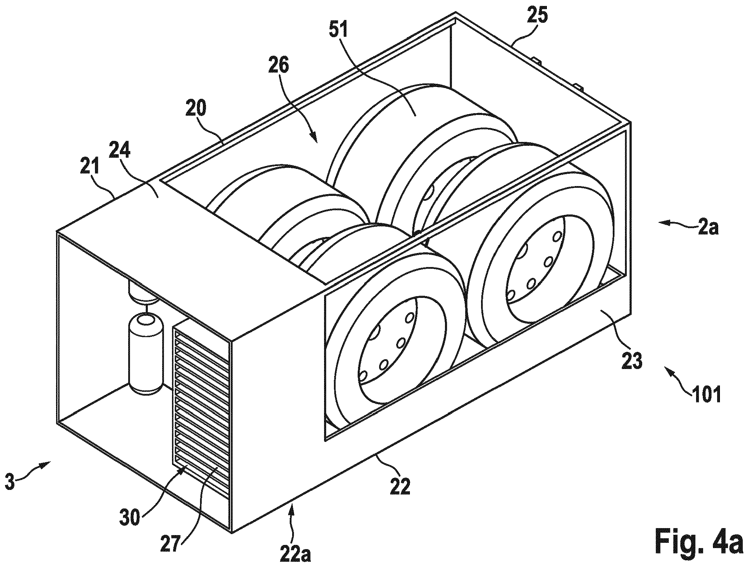

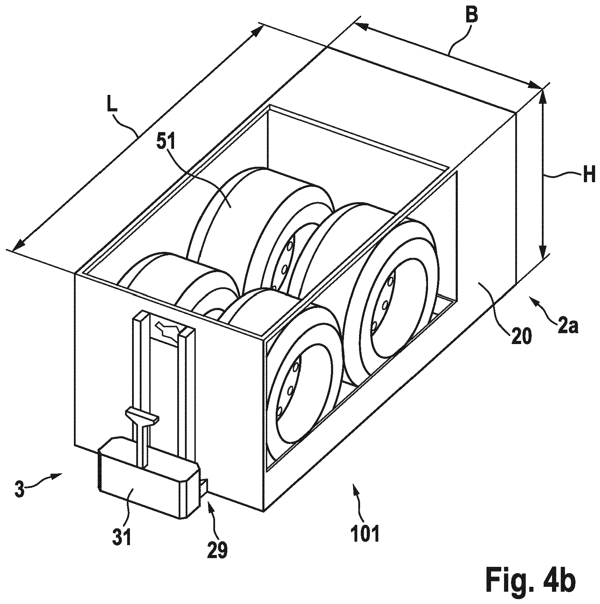

Die Wartungs- und Instandsetzungseinheiten 2a, 2b, 2c sind jeweils als kompakte Einheit ausgebildet und weisen, wie insbesondere in den Figuren 4a und 4b erkennbar ist, jeweils eine zum Tragen von Ausrüstungsmitteln 3 geeignete und als solche transportierbare Rahmenkonstruktion 20 auf.

Die Rahmenkonstruktion 20 ist vorliegend als ein Container 21 mit einem Boden 22, Seitenwänden 23, einer Decke 24 und einer Tür 25 aufgebaut. In einem, wie beispielsweise in Figur 1 gezeigten, Bereitstellungszustand 101 steht der Container 21 mit einer Unterseite 22a des Bodens 22 auf einem Umgebungsuntergrund 6, vorliegend auf dem Vorfeld des Flughafens 5. Die Rahmenkonstruktion 20 weist bevorzugt ein Außenmaß mit einer Breite B von etwa 180cm, einer Länge L von etwa 250cm und einer Höhe H von etwa 200cm auf.

Innerhalb der Rahmenkonstruktion 20 ist unter anderem ein Lagerplatz 26 zum Lagern von Flugzeugrädern 51 vorgesehen. Vorliegend können vier Flugzeugräder 51 innerhalb der Rahmenkonstruktion 20 zwischengelagert werden. Ferner ist innerhalb der Rahmenkonstruktion 20 eine Ausrüstungskammer bzw. ein Werkzeugschrank 27 vorgesehen, in der bzw. in dem Ausrüstungsmittel 3 gelagert sein können.

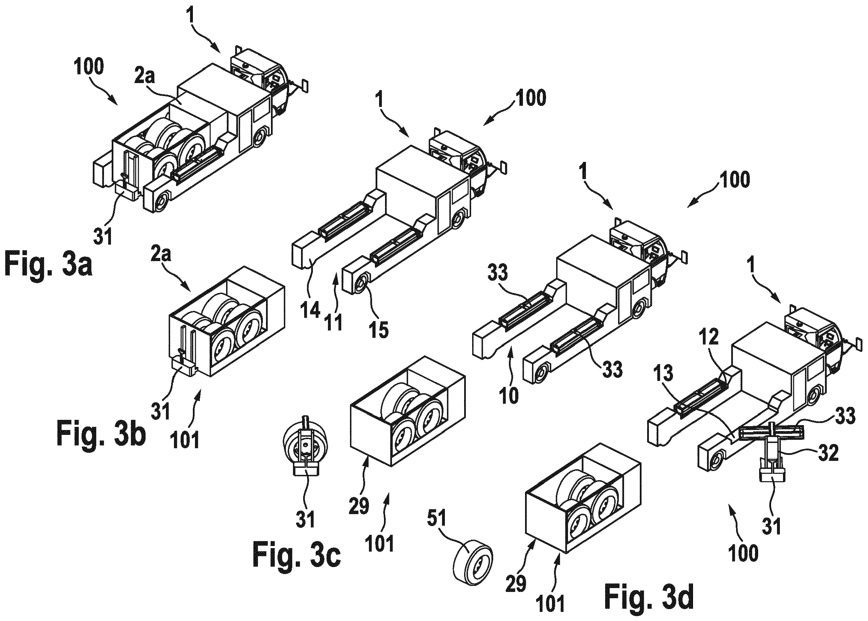

An einer Seitenwandung 23 der Rahmenkonstruktion 20, insbesondere an einer Stirnseitenwand, ist eine nicht näher dargestellte Befestigungseinrichtung 29 vorgesehen, an der ein mobiler Hubwagen 31 temporär fixierbar ist. Die Befestigungseinrichtung 29 umfasst vorliegend zwei in Längserstreckung des Containers 21 ausgerichtete Aufnahmeschächte, in die jeweils eine Gabel des Hubwagens 31 eingeschoben und der Hubwagen 31 durch ein Verspannen der Gabeln innerhalb der Aufnahmeschächte fixiert werden kann, wie es beispielsweise in den Figuren 3a, 3b, 4b gezeigt ist.

Die Ausrüstungsmittel 3 umfassen insbesondere Werkzeuge 30, Hilfsmittel, wie ein Hubwagen 31 und/oder einen Feuerlöscher, Betriebsmittel, Ersatzteile, wie Ersatzräder 51, und dergleichen.

Der vorliegend als Handhubwagen ausgebildete mobile Hubwagen 31 dient insbesondere bei der Ausgestaltung der Wartungs- und Instandsetzungseinheit 2a, 2b, 2c gemäß Figuren 1 bis 4b zum Transportieren eines Flugzeugrads 51 von der Rahmenkonstruktion 20 zu einem nicht näher dargestellten Fahrwerk eines Flugzeugs 5 bzw. von einem Flugzeug 5 zu der Rahmenkonstruktion 20. Dazu weist der Hubwagen 31 eine an einem Hubmast angeordnete Hubeinrichtung 32 zum Anheben oder Absenken des auf dem Hubwagen 31 befindlichen Flugzeugrads 51 auf. Alternativ zu dem mobilen Hubwagen 31 oder zusätzlich hierzu kann an der Rahmenkonstruktion 20 ein Tragarm 40 vorgesehen sein.

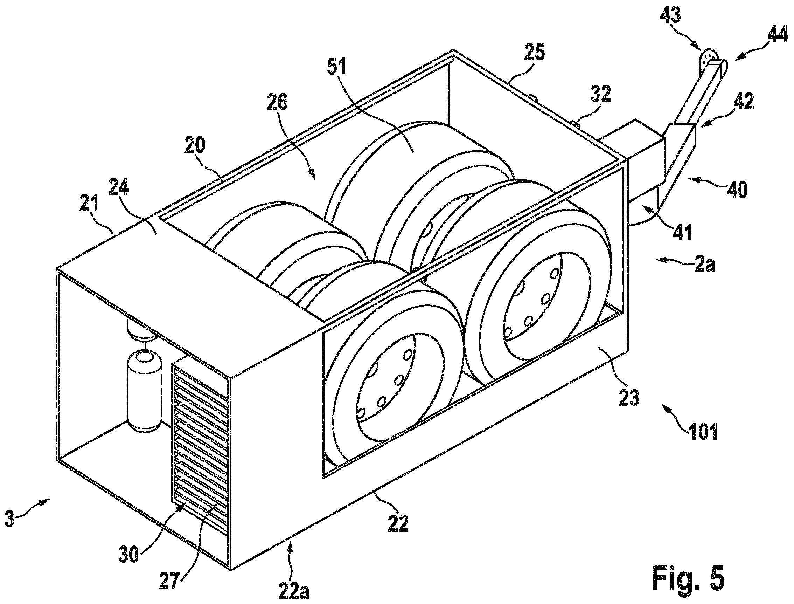

Der Tragarm 40 kann - beispielsweise wie in Figur 5 gezeigt - an der Rahmenkonstruktion 20 angeordnet sein und dient zum Anheben und Versetzen eines Flugzeugrads 51. Der Tragarm 40 ist hierbei über ein Drehgelenk 41 gegenüber der Rahmenkonstruktion 20 verschwenkbar gelagert und ist über einen Mechanismus 42 in seiner Längserstreckung teleskopartig verlängerbar ausgebildet. An dem freien Ende 44 des Tragarms 40 ist eine nicht näher dargestellte Einrichtung 43 zum temporären Fixieren eines Flugzeugrads 51 an dem Tragarm 40 angeordnet, beispielsweise in Art einer Radaufnahme.

Das Transportfahrzeug 1 ist vorliegend als ein Niederflurhubfahrzeug ausgebildet, mit dem die Rahmenkonstruktion 20 in einer dauerhaft nahezu horizontalen Lage angehoben, abgesenkt und transportiert werden kann. Dazu dient die in einem Aufnahmebereich 11 des Transportfahrzeugs 1 angeordnete Hubeinrichtung 10, welche ein Anheben, Absenken und Halten der Rahmenkonstruktion 20 zwischen einem ersten Lastrad 14 und einem zweiten Lastrad 15 ermöglicht. Der Aufnahmebereich 11 ist dabei von drei Seiten des Fahrzeugs 1 umgeben; insbesondere kann das von oben in einer Draufsicht U-förmig aussehende Fahrzeug mit dem offenen Teil des "U", dem sogenannten Aufnahmebereich 11, die Rahmenkonstruktion 20 seitlich umgeben.

Das erste Lastrad 14 ist vorliegend in Hauptfahrtrichtung des Fahrzeugs 1 links und das zweite Lastrad 15 rechts angeordnet, wie beispielsweise in Figur 3b gekennzeichnet. Oberhalb des ersten Lastrads 14 und des zweiten Lastrad 15 weist das Transportfahrzeug 1 jeweils eine zusätzliche Ladefläche 12, 13 auf, auf der jeweils eine Pressluftflasche 33 transportierbar ist. Die Pressluftflasche 33 dient beispielsweise bei Wartungsarbeiten, insbesondere bei einem Radwechsel, für das Anheben oder Abstützen des Flugzeugs 5, insbesondere des Bugfahrwerk oder eines der Hauptfahrwerke.

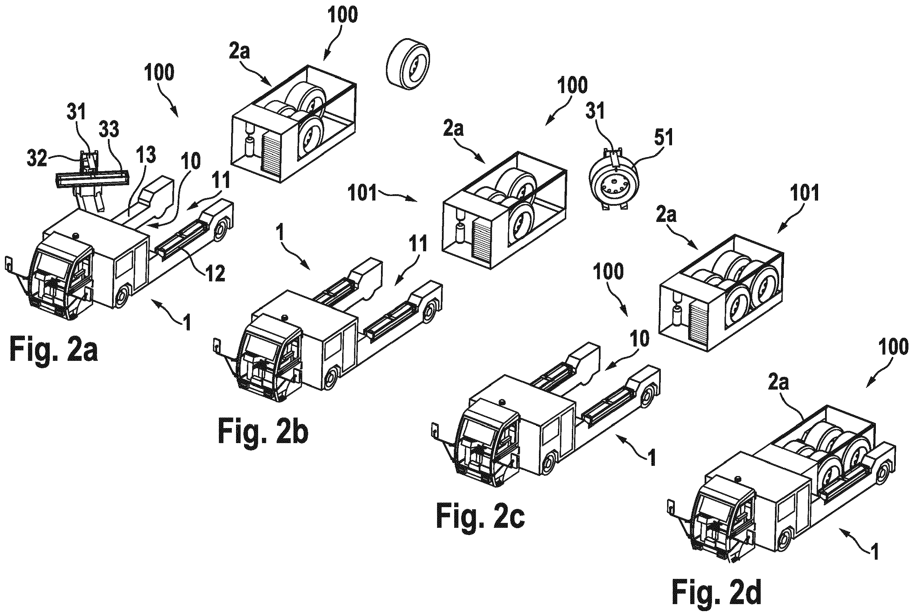

Für einen Radwechsel an einem Flugzeug 5 wird die Wartungs- und Instandsetzungseinheit 2a, wie in den Figuren 2d und 3a gezeigt, mittels des Transportfahrzeugs 1 zu dem jeweiligen Flugzeug 5 transportiert. An dem Flugzeug 5 angekommen, wird die Wartungs- und Instandsetzungseinheit 2a, insbesondere die Rahmenkonstruktion 20, mittels der Hubeinrichtung 10 auf den Untergrundboden 6 herabgelassen.

Nach Absetzen der Rahmenkonstruktion 20 kann der mobile Hubwagen 31 von der Befestigungseinrichtung 29 abgenommen und eingesetzt werden. Zeitgleich kann das Transportfahrzeug 1 unter Freiwerden des Aufnahmebereichs 11 ohne die Wartungs- und Instandsetzungseinheit 2a nach vorne fahren.

Mit dem Hubwagen 31 wird sodann mindestens eine der auf den Ladeflächen 12, 13 gelagerten Pressluftflaschen 33 abgenommen und zudem zu bearbeitenden Fahrwerk gebracht. Das Transportfahrzeug 1 kann nun beispielsweise zurück zum Ausrüstungslager 7 fahren, um eine andere die Wartungs- und Instandsetzungseinheit 2b, 2c aufzunehmen.

In den nächsten Schritten kann der Radwechsel erfolgen, insbesondere ein Anheben des Flugzeugs 5 bzw. des jeweiligen Fahrwerks unter Anwendung der Pressluft aus der Pressluftflasche 33, ein Lösen eines Flugzeugrads 51, ein Verbringen des Flugzeugrads 51 zu der Rahmenkonstruktion 20, ein Verbringen eines Ersatzrads 51 von der Rahmenkonstruktion 20 zu dem Fahrwerk, ein montieren des Ersatzrads 51 und ein Absetzen des Flugzeugs 5 auf den Untergrundboden 6. Das Ein- und Auslagern der Flugzeugräder 51 in und aus der Rahmenkonstruktion 20 kann hierbei mittels des Hubwagens 31 oder eines Tragarms 40 erfolgen.

Nach Abschluss der Arbeiten kann die zum Transport wieder vorbereitete Wartungs- und Instandsetzungseinheit 2a von dem Transportfahrzeug 1 abgeholt werden, indem diese in dem Aufnahmebereich 11 mittels der Hubeinrichtung 10 angehoben und von dem Transportfahrzeug 1 getragen wird.

Es sollte deutlich sein, dass der Schutzbereich der vorliegenden Erfindung nicht auf die beschriebenen Ausführungsbeispiele begrenzt ist, sondern in den Ansprüchen definiert wird. Insbesondere der Aufbau der Wartungs- und Instandsetzungseinheit sowie des Transportfahrzeugs kann - ohne den in den Ansprüchen definierten Kern der Erfindung zu verändern - durchaus modifiziert sein.

### Bezugszeichenliste:

- 1: Transportfahrzeug
- 2a: Wartungs- und Instandsetzungseinheit
- 2b: Wartungs- und Instandsetzungseinheit
- 2c: Wartungs- und Instandsetzungseinheit
- 3: Ausrüstungsmittel
- 4: Flughafen
- 5: Flugzeug
- 6: Untergrundboden, Vorfeld
- 7: Ausrüstungslager, Hangar
- 10: Hubeinrichtung
- 11: Aufnahmebereich
- 12: Ladefläche
- 13: Ladefläche
- 14: erstes Lastrad
- 15: zweites Lastrad
- 20: Rahmenkonstruktion
- 21: Container
- 22: Boden
- 22a: Unterseite
- 23: Wand, Seitenwandung
- 24: Decke
- 25: Tür
- 26: Lagerplatz
- 27: Ausrüstungskammer, Werkzeugschrank
- 29: Befestigungseinrichtung
- 30: Werkzeug
- 31: Hubwagen
- 32: Hubeinrichtung
- 33: Pressluftflasche
- 40: Tragarm
- 41: Gelenk
- 42: Ausziehmechanismus
- 43: Radaufnahme
- 44: freies Ende
- 51: Flugzeugrad
- 100: System
- 101: Bereitstellungszustand
- B: Breite
- H: Höhe
- L: Länge

## Patentansprüche

1. System (100) zum Bereitstellen von Wartungs- und Instandsetzungseinheiten (2a, 2b, 2c) für Wartungsarbeiten an Flugzeugen (5), nämlich zum Wechseln von Flugzeugrädern (51), umfassend
- mindestens eine Wartungs- und Instandsetzungseinheit (2a, 2b, 2c), welche zumindest eine zum Tragen von Ausrüstungsmitteln (3) geeignete und als solche transportierbare Rahmenkonstruktion (20) aufweist, und
- mindestens ein Transportfahrzeug (1) mit einer Hubeinrichtung (10) zum Anheben, Absetzen und Transportieren der Wartungs- und Instandsetzungseinheit (2a, 2b, 2c),
**dadurch gekennzeichnet, dass**
innerhalb der Rahmenkonstruktion (20) ein Lagerplatz (26) für mindestens ein Flugzeugrad (51) und mindestens eine Ausrüstungskammer (27) zum Lagern von Ausrüstungsmitteln (3) vorgesehen sind.

2. System nach Anspruch 1, **dadurch gekennzeichnet,**
**dass** die Rahmenkonstruktion (20) als ein zumindest teilweise geschlossener Container (21) mit einem Boden (22), Wänden (23) und/oder einer Decke (24) ausgebildet ist.

3. System nach einem der Ansprüche 1 oder 2, **dadurch gekennzeichnet, dass** die Rahmenkonstruktion (20) in einem Bereitstellungszustand (101) mit einer Unterseite (22a) an einem Untergrundboden (6), insbesondere auf dem Flughafenvorfeldboden, aufliegt.

4. System nach einem der voranstehenden Ansprüche, **dadurch gekennzeichnet,**
**dass** die Rahmenkonstruktion (20) ein Außenmaß mit einer Breite (B) von etwa 180cm, einer Länge (L) von etwa 250cm und einer Höhe (H) von etwa 200cm aufweist.

5. System nach einem der voranstehenden Ansprüche, **dadurch gekennzeichnet,**
**dass** die Wartungs- und Instandsetzungseinheit (2a, 2b, 2c) einen mobilen Hubwagen (31) umfasst, der zum Transport von Flugzeugrädern (51) geeignet ist.

6. System nach Anspruch 5, **dadurch gekennzeichnet,**
**dass** an einer Seitenwandung (23) der Rahmenkonstruktion (20) eine Befestigungseinrichtung (29) vorgesehen ist, an der der Hubwagen (31) zumindest temporär fixierbar ist.

7. System nach einem der voranstehenden Ansprüche, **dadurch gekennzeichnet,**
**dass** an der Rahmenkonstruktion (20) ein Tragarm (40) angeordnet ist, der zum Anheben und Versetzen eines Flugzeugrads (51) geeignet ist.

8. System nach einem der voranstehenden Ansprüche, **dadurch gekennzeichnet,**
**dass** das Transportfahrzeug (1) als ein Niederflurhubfahrzeug ausgebildet ist, bei dem die Ladung, insbesondere die Wartungs- und Instandsetzungseinheit (2a, 2b, 2c), zwischen einem ersten Lastrad und einem zweiten Lastrad angeordnet und mittels der Hubeinrichtung (10) im Wesentlichen horizontal anhebbar ist.

9. System nach einem der voranstehenden Ansprüche, **dadurch gekennzeichnet,**
**dass** das Transportfahrzeug (1) mindestens eine zusätzliche Ladefläche (12, 13) aufweist, auf der mindestens eine Pressluftflasche (33) transportierbar ist.

10. Verfahren zum Bereitstellen von, insbesondere dezentralen, Wartungs- und Instandsetzungseinheiten (2a, 2b, 2c) für Wartungsarbeiten an Flugzeugen (5), nämlich zum Wechseln von Flugzeugrädern (51), unter Anwendung eines Systems (100) nach einem der voranstehenden Ansprüche, mit den folgenden Schritten
- Bestücken mindestens einer Wartungs- und Instandsetzungseinheit (2a, 2b, 2c) mit Ausrüstungsmitteln (3) in einem zentralen Ausrüstungslager (7), insbesondere auf einem Flughafengelände,
- Aufnehmen einer ersten Wartungs- und Instandsetzungseinheit (2) von einem Transportfahrzeug (1), insbesondere durch ein Anheben der ersten Wartungs- und Instandsetzungseinheit (2) mittels der Hubeinrichtung (10),
- Transportieren der ersten Wartungs- und Instandsetzungseinheit (2) von dem Ausrüstungslager (8) zu einem ersten Flugzeug (5a),
- Absetzen der ersten Wartungs- und Instandsetzungseinheit (2) von dem Transportfahrzeug (1), insbesondere im Bereich neben und/oder unterhalb des ersten Flugzeugs (5a).

11. Verfahren nach Anspruch 10, **dadurch gekennzeichnet, dass** nach dem Absetzen der ersten Wartungs- und Instandsetzungseinheit (2) von dem Transportfahrzeug (1) ein Aufnehmen einer zweiten Wartungs- und Instandsetzungseinheit (3), ein Transportieren der zweiten Wartungs- und Instandsetzungseinheit (3) von dem Ausrüstungslager (8) zu einem zweiten Flugzeug (5b) und ein Absetzen der zweiten Wartungs- und Instandsetzungseinheit (3) im Bereich des zweiten Flugzeugs (5b) erfolgt.

12. Verfahren nach einem der Ansprüche 10 oder 11, **dadurch gekennzeichnet, dass**
nach dem Absetzen der ersten oder zweiten Wartungs- und Instandsetzungseinheit (2, 3) der an der Rahmenkonstruktion (20) angeordnete Tragarm (40) derart verlagert wird, dass bei einem Flugzeugradwechsel ein von einem Flugzeug (5) demontiertes Flugzeugrad (51) mittels des Tragarms (40) in Richtung der Wartungs- und Instandsetzungseinheit (2, 3) verlagert wird und optional einen Flugzeugrad (51) von der Wartungs- und Instandsetzungseinheit (2, 3) zu einer Radaufnahme des Flugzeugs (5) verlagert wird.

## Claims

1. A system (100) for providing maintenance and repair units (2a, 2b, 2c) for maintenance work on aircraft (5), in particular for replacing aircraft wheels (51), comprising
- at least one maintenance and repair unit (2a, 2b, 2c), which has at least one frame structure (20) suitable for carrying equipment means (3) and transportable as such and
- at least one transport vehicle (1) having a lifting device (10) for raising, lowering and transporting the maintenance and repair unit (2a, 2b, 2c)
**characterized in that**
within the frame structure (20) a storage location (26) for at least one aircraft wheel (51) and at least one equipment chamber (27) for storing equipment means (3) are provided.

2. The system according to patent claim 1, **characterized in that** the frame structure (20) is formed as an at least partly closed container (21) with a bottom (22), walls (23) and/or a ceiling (24).

3. The system according to any one of claims 1 or 2, **characterized in that** the frame structure (20) in a state of readiness (101) rests with an underside (22a) on an underground floor (6), in particular on the airport apron ground.

4. The system according to any one of the preceding claims,
**characterized in**
**that** the frame structure (20) comprises an outer dimension with a width (B) of approx. 180 cm, a length (L) of approx. 250 cm and a height (H) of approx. 200 cm.

5. The system according to any one of the preceding claims,
**characterized in**
**that** the maintenance and repair unit (2a, 2b, 2c) comprises a mobile lifting truck (31) which is suitable for transportation of aircraft wheels (51).

6. The system according to patent claim 5, **characterized in that** on one side wall (23) of the frame structure (20) a fixation device (29) is provided to which the lifting truck (31) can be fixed at least temporarily.

7. The system according to any one of the preceding claims,
**characterized in**
**that** a support arm (40) is arranged on the frame structure (20) which support arm is suitable for lifting and transferring an aircraft wheel (51).

8. The system according to any one of the preceding claims,
**characterized in**
**that** the transport vehicle (1) is formed as a low-floor lifting vehicle where the cargo, in particular the maintenance and repair unit (2a, 2b, 2c) is arranged between a first load wheel and a second load wheel and can be lifted by means of the lifting device (10) substantially horizontally.

9. The system according to any one of the preceding claims,
**characterized in**
**that** the transport vehicle (1) comprises at least one additional loading area (12, 13) on which at least one compressed air bottle (33) can be transported.

10. A method for providing in particular decentralized maintenance and repair units (2a, 2b, 2c) for maintenance work on aircraft (5), in particular for replacing aircraft wheels (51) by using a system (100) according to any one of the preceding claims, with the following steps
- equipping at least one maintenance and repair unit (2a, 2b, 2c) with equipment means (3) in a central equipment storage (7), in particular on an airport site,
- picking up a first maintenance and repair unit (2) from a transport vehicle (1), in particular by lifting the first maintenance and repair unit (2) by means of the lifting device (10),
- transporting the first maintenance and repair unit (2) from the equipment storage (8) to a first aircraft (5),
- lowering the first maintenance and repair unit (2) from the transport vehicle (1), in particular in the area next to and/or below the first aircraft (5).

11. The method according to patent claim 10, **characterized in that**, after lowering of the first maintenance and repair unit (2) from the transport vehicle (1), picking up of a second maintenance and repair units (3), transporting of the second maintenance and repair unit (3) from the equipment storage (8) to a second aircraft (5b) and lowering of the second maintenance and repair unit (3) in the area of the second aircraft (5b) occurs.

12. The method according to any one of claims 10 to 11, **characterized in that**,
after lowering of the first or second maintenance and repair unit (2, 3), the support arm (40) arranged on the frame structure (20) will be moved such that in the case of an aircraft wheel replacement an aircraft wheel (51) disassembled from an aircraft (5) is moved by means of the support arm (40) in the direction of the maintenance and repair unit (2, 3) and optionally an aircraft wheel (51) will be moved from the maintenance and repair unit (2, 3) to a wheel support of the aircraft (5).

## Revendications

1. Système (100) permettant de fournir des unités de maintenance et de remise en état (2a, 2b, 2c) pour des travaux de maintenance sur des avions (5), en particulier pour le changement de roues (51) d'avion, comprenant
- au moins une unité de maintenance et de remise en état (2a, 2b, 2c), laquelle présente au moins une structure de cadre (20) adaptée à porter des moyens d'équipement (3) et pouvant être transportée en tant que telle, et
- au moins un véhicule de transport (1) pourvu d'un dispositif de levage (10) destiné à lever, à déposer et à transporter l'unité de maintenance et de remise en état (2a, 2b, 2c)
**caractérisé en ce que**
dans la structure de cadre (20) un espace de stockage (26) pour au moins une roue (51) d'avion et au moins une chambre d'équipement (27) pour stocker des moyens d'équipement (3) est prévu.

2. Système selon la revendication 1, **caractérisé en ce que** la structure de cadre (20) est formée en tant que conteneur (21) au moins partiellement fermé, avec un fond (22), des parois (23) et/ou un plafond (24).

3. Système selon l'une quelconque des revendications 1 ou 2,
**caractérisé en ce**
**que** la structure de cadre (20), dans un état de mise à disposition (101), avec une face inférieure (22a), repose sur un sol de fond (6), surtout sur le sol de l'assistance aéroportuaire.

4. Système selon l'une quelconque des revendications précédentes,
**caractérisé en ce**
**que** la structure de cadre (20) comporte une dimension extérieure avec une largeur (B) d'environ 180 cm, une longueur (L) d'environ 250 cm et une hauteur (H) d'environ 200 cm.

5. Système selon l'une quelconque des revendications précédentes,
**caractérisé en ce**
**que** l'unité de maintenance et de remise en état (2a, 2b, 2c) comporte un chariot élévateur (31) mobile adapté à transporter des roues (51) d'avion.

6. Système selon la revendication 5, **caractérisé en ce que**, sur une paroi latérale (23) de la structure de cadre (20), un dispositif de fixation (29) est prévu sur lequel le chariot élévateur (31) peut être fixé au moins temporairement.

7. Système selon l'une quelconque des revendications précédentes,
**caractérisé en ce**
**qu'**un bras porteur (40) est agencé à la structure de cadre (20) qui est adapté à lever et à déplacer un roue (51) d'avion.

8. Système selon l'une quelconque des revendications précédentes,
**caractérisé en ce**
**que** le véhicule de transport (1) est formé en tant que véhicule de levage à plancher bas, où la charge, surtout l'unité de maintenance et de remise en état (2a, 2b, 2c) est agencée entre une première roue de charge et une deuxième roue de charge et peut être levée surtout horizontalement au moyen du dispositif de levage (10).

9. Système selon l'une quelconque des revendications précédentes,
**caractérisé en ce**
**que** le véhicule de transport (1) comporte au moins une surface supplémentaire de chargement (12, 13) sur laquelle on peut transporter au moins une bouteille d'air comprimé (33).

10. Procédé permettant de fournir des unités de maintenance et de remise en état (2a, 2b, 2c), surtout décentralisées, pour des travaux de maintenance sur des avions (5), en particulier pour le changement des roues (51) d'avion, en utilisant un système (100) selon l'une quelconque des revendications précédentes, comportant les étapes suivantes:
- équiper au moins une unité de maintenance et de remise en état (2a, 2b, 2c) avec des moyens d'équipement (3) dans un magasin central d'équipement (7), surtout sur un site aéroportuaire,
- prendre une première unité de maintenance et de remise en état (2) à partir d'un véhicule de transport (1), surtout en levant la première unité de maintenance et de remise en état (2) au moyen d'un dispositif de levage (10),
- transporter la première unité de maintenance et de remise en état (2) du magasin d'équipement (8) à un premier avion (5a),
- déposer la première unité de maintenance et de remise en état (2) du véhicule de transport (1), surtout dans la zone à côté et/ou en-dessous du premier avion (5a).

11. Procédé selon la revendication 10, **caractérisé en ce que**, après le déplacement de la première unité de maintenance et de remise en état (2) du véhicule de transport (1), une prise d'une deuxième unité de maintenance et de remise en état (3), un transport de la deuxième unité de maintenance et de remise en état (3) du magasin central d'équipement (8) à un deuxième avion (5b) et un déplacement de la deuxième unité de maintenance et de remise en état (3) dans la zone du deuxième avion (5b) a lieu.

12. Procédé selon l'une quelconque des revendications 10 ou 11,
**caractérisé en ce**
**que**, après le déplacement de la première ou de la deuxième unité de maintenance et de remise en état (2, 3), le bras porteur (40) agencé à la structure de cadre (20) est déplacé de sorte que, lors d'un changement d'une roue (51) d'avion, une roue (51) d'avion démontée d'un avion (5) est déplacée au moyen du bras porteur (40) dans la direction de l'unité de maintenance et de remise en état (2, 3) et facultativement une roue (5) d'avion est déplacée de l'unité de maintenance et de remise en état (2, 3) à une prise de roue de l'avion (5).
